# FASCICULE DE BREVET EUROPEEN

(11) **EP 0 785 339 B1**
(45) Date de publication et mention de la délivrance du brevet: **19.05.1999**
(21) Numéro de dépôt: 96402889.8
(22) Date de dépôt: 26.12.1996
(51) Int. Cl.: F01D 5/18

(54) **Aube refrigerée de distributeur de turbine**
Gekühlte Turbinenleitschaufel
Cooled turbine vane

(30) Priorité: 04.01.1996 FR 9600038
(43) Date de publication de la demande: 23.07.1997
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Noiret, Isabelle Marie-Agnès, 77000 Melun (FR); Taillant, Jean-Claude Christian, 77000 Vaux le Penil (FR)

(56) Documents cités:
- FR-A- 2 150 475
- FR-A- 2 457 965
- FR-A- 2 672 338
- US-A- 4 312 624

## Description

La présente invention a pour objet une aube de distributeur de turbine.

L'amélioration et l'optimisation des performances, notamment des turbomachines aéronautiques, n'ont pas eu de cesse.

C'est en particulier le cas de la température à l'entrée de la ou des turbines. Une augmentation du niveau de cette température permet d'obtenir un gain en consommation spécifique, c'est-à-dire de pouvoir augmenter le rayon d'action de l'avion ou de réduire la masse de carburant à emporter. Cette augmentation de température permet aussi de faire croître la poussée.

Les turbomachines actuelles à haute performance sont dotées d'aubes directrices de turbine capables de résister à des températures voisines de 1600°C.

De telles aubes nécessitent un système de refroidissement énergique et un système de canaux internes très élaborés.

L'état de la technique est illustré par FR-A-2 457 965, EP-A-0 562 944, FR-A-2 071 665, FR-A-2 473 621, EP-A-0 034 961, EP-A-0 527 554 et FR-A-2 672 338, dans lesquels le refroidissement est obtenu par deux grands procédés : la convection interne, le film protecteur.

L'invention a pour objet une aube réfrigérée dans laquelle on obtient un niveau de température très homogène entre l'intrados et l'extrados.

L'invention est donc relative à une aube de distributeur de turbine, comportant une embase intérieure et une embase extérieure délimitant en partie la veine principale d'un courant de gaz chauds issus d'un moteur à gaz, une partie aérodynamique creuse s'étendant radialement entre les embases et présentant un bord d'attaque et un bord de fuite qui sont séparés l'un de l'autre et reliés par une paroi latérale concave (intrados) et une paroi latérale convexe (extrados), une cloison radiale séparant l'intérieur de ladite aube en un canal de bord d'attaque et une cavité principale, un dispositif de refroidissement prévu à l'intérieur de ladite aube, ce dispositif comportant notamment une garniture tubulaire perforée, disposée axialement dans la cavité principale destinée à recevoir un courant de réfrigérant et à diriger ce réfrigérant contre une partie des surfaces intérieures desdites parois latérales, cette garniture étant maintenue écartée desdites parois latérales par des nervures longitudinales, espacées les unes des autres, partant desdites parois latérales et faisant saillie à l'intérieur de la partie aérodynamique, le réfrigérant impactant lesdites parois étant réintroduit dans la veine principale par des fentes prévues dans le bord de fuite. Selon l'invention la garniture tubulaire comporte une cloison étanche qui s'étend entre les embases et qui sépare l'intérieur de ladite garniture en une cavité d'intrados située du côté de la paroi latérale concave et une cavité d'extrados située du côté de la paroi latérale convexe, la cavité d'intrados étant obturée à son extrémité voisine de l'embase extérieure par une paroi obturatrice, et il est prévu deux circuits de refroidissement séparés alimentés ensemble à partir de l'embase extérieure : un premier circuit comprenant le canal de bord d'attaque et la cavité d'intrados, via un passage ménagé au voisinage de l'embase intérieure dans la cloison radiale et la garniture, et un deuxième circuit comprenant la cavité d'extrados et des moyens de refroidissement de l'embase intérieure qui sont mis en communication par un orifice ménagé dans une plaque d'étanchéité intérieure de l'embase intérieure.

Les avantageuses dispositions suivantes sont en outre de préférence adoptées :
- le canal du bord d'attaque est muni de perturbateurs ;
- des perturbateurs sont prévus entre les nervures longitudinales des parois latérales ;
- des pontets relient les parois latérales en aval de la garniture tubulaire.

D'autres avantages et caractéristiques de l'invention ressortiront à la lecture de la description suivante faite à titre d'exemple et en référence aux dessins annexés dans lesquels :

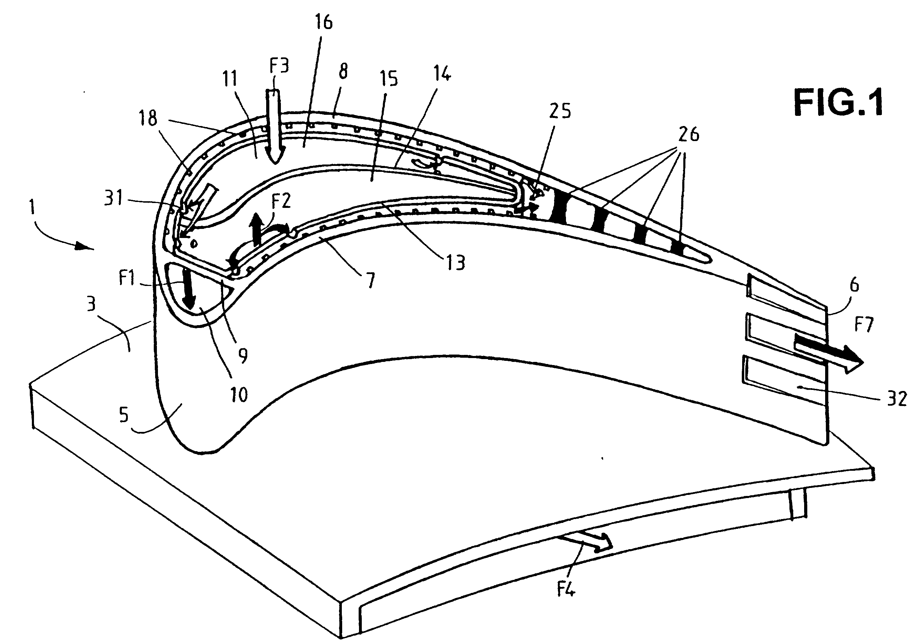

la figure 1 montre en perspective une partie de l'aube selon l'invention avec son embase inférieure ;

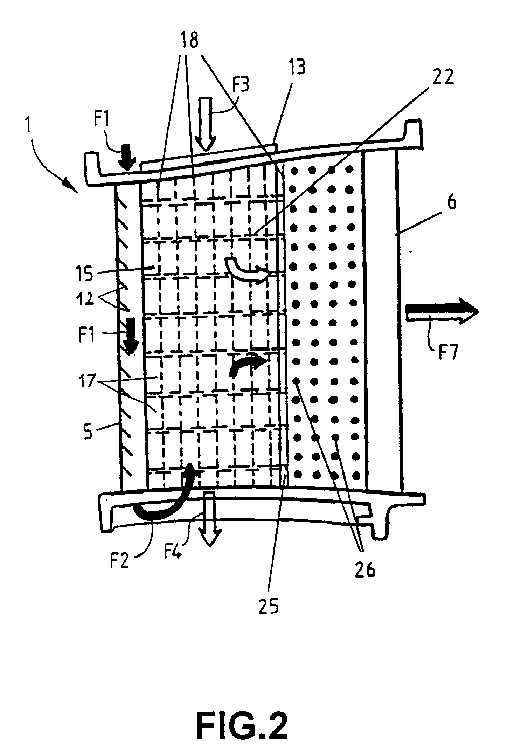

la figure 2 est une coupe selon un plan médian passant par le bord d'attaque et le bord de fuite de l'aube qui montre schématiquement la circulation du réfrigérant dans les deux circuits de refroidissement ;

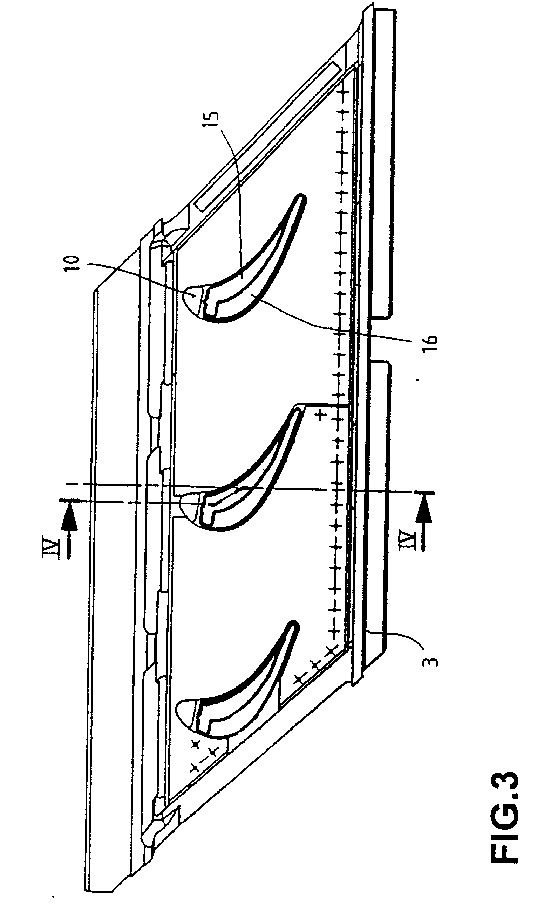

la figure 3 est une vue en perspective et développée de l'embase intérieure d'un distributeur de turbine avec des positions de plusieurs aubes successives ;
la figure 4 est une coupe de l'aube selon la figure IV IV de la figure 3.

Les dessins montrent une aube 1 réfrigérée de distributeur de turbine qui comporte une partie 2 aérodynamique creuse qui s'étend radialement par rapport à l'axe de rotation de la turbine entre une embase intérieure 3 et une embase extérieure 4. Le distributeur de turbine est constitué par une pluralité d'aubes 1 fixes, disposées en étoile et côte à côte de façon à former une couronne annulaire délimitée intérieurement par les embases intérieures 3 et extérieurement par les embases extérieures 4, afin de permettre le passage d'un courant de gaz chauds entre les aubes, ces gaz chauds étant issus de la chambre de combustion située en amont dudit distributeur. Les gaz chauds sont déviés par les parties aérodynamiques des aubes fixes du distributeur, afin d'attaquer les aubes mobiles de la turbine sous un angle prédéterminé.

La partie 2 aérodynamique de l'aube 1 présenté en amont un bord d'attaque 5, en aval un bord de fuite 6 et deux parois latérales 7 et 8 reliant le bords d'attaque 5 au bord de fuite 6, la paroi latérale 7 étant concave (intrados) et la paroi latérale 8 étant convexe (extrados). Une cloison radiale 9 lisse, qui s'étend entre les embases 3 et 4, relie les parois latérales 7 et 8 et partage l'intérieur de la partie 2 en un canal de bord d'attaque 10 et une cavité principale 11, au centre de l'aube.

Le canal 10 est situé au voisinage du bord d'attaque 5. Ce canal 10 est équipé de perturbateurs 12 qui peuvent être inclinés vers l'intérieur et vers l'embase intérieure 3. Les perturbateurs 12 sont disposés sur l'intrados et l'extrados. Ils favorisent les échanges thermiques par convection forcée.

Une garniture tubulaire perforée 13 est située dans la cavité principale 11. Cette garniture 13 comporte une cloison étanche 14 qui s'étend entre les embases 3 et 4 et dans une direction sensiblement parallèle à la corde de l'aube 1, afin de partager la cavité principale 11 en une cavité d'intrados 15, située du côté de la paroi latérale concave 7 et une cavité d'extrados 16, située du côté de la paroi latérale convexe 8. La garniture 13 est guidée et maintenue dans son logement par une pluralité de nervures longitudinales situées à différentes hauteurs de l'aube 1 et qui font saillie à l'intérieur de la partie aérodynamique de l'aube 1 à partir des parois latérales 7 et 8. Dans les canaux 17 situés entre les nervures 22 sont disposés, sur la paroi interne de l'aube 1, des perturbateurs aérodynamiques 18 dont le but est de favoriser les échanges thermiques internes.

La cavité d'intrados 15 est obturée à son extrémité voisine de l'embase extérieure 4 par une paroi obturatrice 19.

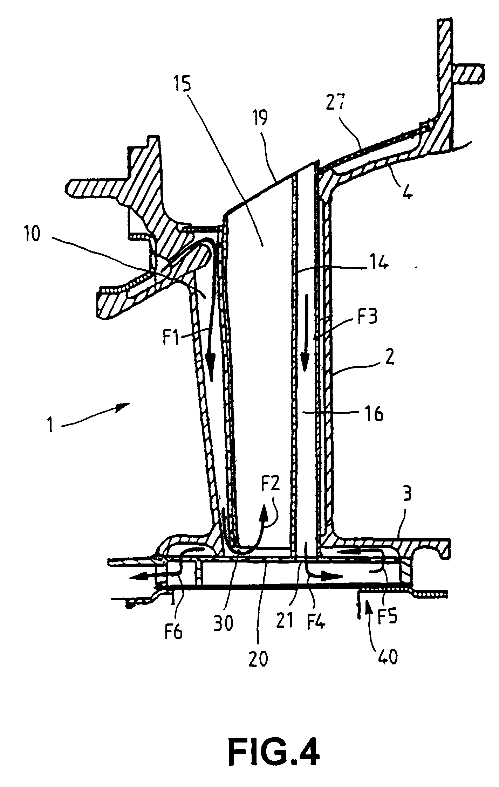

Comme on le voit plus clairement sur la figure 4, le canal 10 de bord d'attaque et la cavité d'intrados 15 communiquent par un passage 30 ménagé dans la cloison radiale 9 et la garniture 13 en pied d'aube, et de préférence au-dessus de la plaque d'étanchéité intérieure 20. Cette dernière comporte, en revanche un orifice 21 en regard de la cavité d'extrados 16, afin de mettre cette dernière en communication avec les moyens 40 de refroidissement de l'embase intérieure 3.

Les nervures 22 disposées côté intrados et les nervures 22 disposées coté extrados se prolongent jusqu'à une zone de mélange 25 située en aval de la garniture 13. Entre cette zone de mélange 25 et le bord de fuite 6, les parois latérales 7 et 8 sont reliées par des pontets 26 qui permettent la liaison mécanique des deux parois 7 et 8 et qui assurent en outre le brassage de l'air à l'aval de la garniture 13. Des fentes 32 sont prévues au bord de fuite 6 du côté intrados.

L'aube 1, la cloison radiale 9, les nervures 22, les perturbateurs 12 et 18 ainsi que les pontets 26 forment une pièce monobloc réalisée en fonderie. La garniture 13 est une pièce métallique. L'ensemble des éléments du distributeur - aube 1, garniture 13, la plaque d'étanchéité intérieure 20 et la plaque d'étanchéité extérieure 27 - sont solidarisés par brasage.

L'aube 1 décrite ci-dessus comporte deux circuits internes, un premier circuit défini par le canal 10 de bord d'attaque, le passage 30 et la cavité d'intrados 15 et un deuxième circuit défini par la cavité d'extrados 16, l'orifice 21 et le circuit 40 de refroidissement de l'embase intérieure 3. Ces deux circuits sont alimentés depuis l'embase extérieure 4 à partir d'une même source de réfrigérant, de l'air frais issu d'un compresseur par exemple, et se rejoignent dans la zone de mélange 25.

Le canal 10 de bord d'attaque est alimenté par un débit d'air frais qui circule de la tête vers le pied de l'aube, dans le sens de la flèche F1. Cet air refroidit ainsi le bord d'attaque de l'aube 1. Le débit d'air ainsi réchauffé atteint le pied de la garniture 13 et pénètre dans la cavité d'intrados 15 par le passage 30.

Lors de sa remontée dans la cavité d'intrados 15, dans le sens de la flèche F2, de l'air s'échappe par les perforations 31 de la garniture 13 côté intrados. Il circule entre les nervures longitudinales 22 pour aboutir à la zone de mélange 25.

La cavité d'extrados 16 est alimenté en tête d'aube en air qui a la même température et la même pression que celui qui alimente le canal 10 de bord d'attaque, puisqu'il provient de la même source. Cet air circule dans la cavité d'extrados 16 dans le sens de la flèche F3. Un débit d'air va s'échapper par les perforations 31 de la garniture 13 côté extrados. Cet air circule entre les nervures longitudinales 22 pour aboutir à la zone de mélange 25.

A partir de la zone de mélange 25, les deux flux d'air impacté sur les parois 7 et 8 s'écoulent vers le bord de fuite et s'évacuent dans la veine de gaz chauds par les fentes 32 dans le sens de la flèche F7.

L'extrémité inférieure de la cavité d'extrados 16 est débouchante grâce à l'orifice 21. Elle permet ainsi le passage de l'air de refroidissement de l'embase intérieure 3 (flèches F4, F5) et les purges de cet air (flèche F6).

Les perturbateurs 12 et 18 et les pontets 26 assurent un brassage énergique de réfrigérant.

De préférence un élargissement local est prévu en pied d'aube pour faciliter le passage du débit d'air de refroidissement du canal 10 du bord d'attaque vers la cavité d'intrados 15 au moment du retournement.

## Revendications

1. Aube de distributeur de turbine, comportant une embase intérieure (3) et une embase extérieure (4) délimitant en partie la veine principale d'un courant de gaz chauds issus d'un moteur à gaz, une partie aérodynamique (2) creuse s'étendant radialement entre les embases (3,4) et présentant un bord d'attaque (5) et un bord de fuite (6) qui sont séparés l'un de l'autre et reliés par une paroi latérale concave (7) (intrados) et une paroi latérale convexe (8) (extrados), une cloison radiale (9) séparant l'intérieur de ladite aube (1) en un canal de bord d'attaque (10) et une cavité principale (11), un dispositif de refroidissement prévu à l'intérieur de ladite aube (1), ce dispositif comportant notamment une garniture tubulaire (13) perforée, disposée axialement dans ladite cavité principale (11) destinée à recevoir un courant de réfrigérant et à diriger ce réfrigérant contre une partie des surfaces intérieures desdites parois latérales (7,8), cette garniture (13) étant maintenue écartée desdites parois latérales (7,8) par des nervures longitudinales (22), espacées les unes des autres; partant desdites parois latérales (7,8) et faisant saillie à l'intérieur de la partie aérodynamique (2), le réfrigérant impactant lesdites parois (7,8) étant réintroduit dans la veine principale par des fentes (32) prévues dans le bord de fuite (6), caractérisée par le fait que la garniture tubulaire (13) comporte une cloison étanche (14) qui s'étend entre les embases (3,4) et qui sépare l'intérieur de ladite garniture (13) en une cavité d'intrados (15) située du côté de la paroi latérale concave (7) et une cavité d'extrados (16) située du côté de la paroi latérale convexe (8), la cavité d'intrados (15) étant obturée à son extrémité voisine de l'embase extérieure (4) par une paroi obturatrice (19), et par le fait qu'il est prévu deux circuits de refroidissement séparés alimentés ensemble à partir de l'embase extérieure (4) : un premier circuit comprenant le canal de bord d'attaque (10) et la cavité d'intrados (15), via un passage (30) ménagé au voisinage de l'embase intérieure (3) dans la cloison radiale (9) et la garniture (13), et un deuxième circuit comprenant la cavité d'extrados (16) et des moyens de refroidissement (40) de l'embase intérieure (3) qui sont mis en communication par un orifice (21) ménagé dans une plaque d'étanchéité intérieure (20) de l'embase intérieure (3).

2. Aube selon la revendication 1, caractérisée par le fait que le canal de bord d'attaque (10) est muni de perturbateurs (12).

3. Aube selon l'une des revendications 1 et 2, caractérisée par le fait que des perturbateurs (18) sont prévus entre les nervures longitudinales (22) des parois latérales (7, 8).

4. Aube selon l'une quelconque des revendications 1 à 3, caractérisée par le fait que des pontets (26) relient les parois latérales (7, 8) en aval de la garniture tubulaire (13).

## Claims

1. Turbine guide vane, comprising an inner base (3) and an outer base (4) partially delimiting the main passage of a stream of hot gases coming from a gas engine, a hollow aerodynamic part (2) extending radially between the bases (3, 4) and having a leading edge (5) and a trailing edge (6) which are separated from one another and connected by a concave side wall (7) (the pressure face) and a convex side wall (8) (the suction face), a radial partition (9) separating the inside of the said vane (1) into a leading edge duct (10) and a main cavity (11), a cooling device provided inside the said vane (1), this device in particular comprising a perforated tubular liner (13) arranged axially inside the said main cavity (11) intended to receive a stream of refrigerant and to direct this refrigerant against part of the interior surfaces of the said side walls (7, 8), this liner (13) being held away from the said side walls (7, 8) by spaced-apart longitudinal ribs (22) starting from the said side walls (7, 8) and projecting into the aerodynamic part (2), the refrigerant impacting on the said walls (7, 8) being reintroduced into the main passage via slits (32) made in the trailing edge (6), characterized in that the tubular liner (13) has a leaktight partition (14) which extends between the bases (3, 4) and which divides the inside of the said liner (13) into a pressure-face cavity (15) located on the same side as the concave side wall (7) and a suction-face cavity (16) located on the same side as the convex side wall (8), the pressure-face cavity (15) being closed at its end near the outer base (4) by a closure wall (19), and in that there are two separate cooling circuits supplied jointly from the outer base (4): a first circuit comprising the leading edge duct (10) and the pressure-face cavity (15), via a passage (30) formed near the inner base (3) in the radial partition (9) and the liner (13), and a second circuit comprising the suction-face cavity (16) and means (40) of cooling the inner base (3), which are placed in communication via an orifice (21) formed in an inner sealing plate (20) of the inner base (3).

2. Vane according to Claim 1, characterized in that the leading-edge duct (10) is fitted with devices (12) that induce disturbance.

3. Vane according to either of Claims 1 and 2, characterized in that the devices (18) that induce disturbance are provided between the longitudinal ribs (22) of the side walls (7, 8).

4. Vane according to any one of Claims 1 to 3, characterized in that small bridges of material (26) connect the side walls (7, 8) downstream of the tubular liner (13).

## Patentansprüche

1. Turbinenleitschaufel mit einer inneren Sitzfläche (3) und einer äußeren Sitzfläche (4), die zum Teil die Hauptbahn eines Stroms heißer Gase aus einem Gasmotor abgrenzen, wobei sich ein hohler, aerodynamischer Teil (2) radial zwischen den Sitzflächen (3, 4) erstreckt und eine Vorderkante (5) und eine Hinterkante (6) aufweist, die voneinander getrennt sind und durch eine konkave Seitenwand (7) (Druckseite) und eine konvexe Seitenwand (8) (Saugseite) miteinander verbunden werden, wobei eine radiale Trennwand (9) das Innere der genannten Schaufel (1) in einen Vorderkantenkanal (10) und einen Haupthohlraum (11) teilt, wobei im Inneren der genannten Schaufel (1) eine Kühlvorrichtung vorgesehen ist, die insbesondere aus einer mit Durchbohrungen versehenen rohrförmigen Auskleidung (13) besteht, die axial in diesem Haupthohlraum (11) angeordnet ist und dazu bestimmt ist, einen Kühlmittelstrom aufzunehmen und dieses Kühlmittel auf einen Teil der Innenflächen der genannten Seitenwände (7, 8) zu lenken, wobei diese Auskleidung (13) durch Längsrippen (22), die in Abstand voneinander von diesen Seitenwänden (7,8) aus ins Innere des aerodynamischen Teils (2) ragen, in Abstand von diesen Seitenwänden (7, 8) gehalten wird, wobei das aufdie Seitenwände (7, 8) auftreffende Kühlmittel durch Schlitze (32), die in der Hinterkante (6) vorgesehen sind, in den Hauptstrom zurückgeführt wird,
**dadurch gekennzeichnet, daß** die rohförmige Auskleidung (13) eine dichte Trennwand (14) aufweist, die sich zwischen den Sitzflächen (3, 4) erstreckt und das Innere dieser Auskleidung (13) in einen auf der Seite der konkaven Seitenwand (7) befindlichen Druckseitenhohlraum (15) und einen auf der Seite der konvexen Seitenwand (8) befindlichen Saugseitenhohlraum (16) teilt, wobei der Druckseitenhohlraum (15) an seinem an der äußeren Sitzfläche (4) gelegenen Ende durch eine Abdichtwand (19) verschlossen ist, und dadurch, daß zwei getrennte Kühlungskreise vorgesehen sind, die beide von der äußeren Sitzfläche (4) her gespeist werden: ein erster Kreis, der den Vorderkantenkanal (10) und den Druckseitenhohlraum (15) mittels eines Durchlasses (30) in der radialen Trennwand (9) und der Auskleidung (13) umfaßt, und einen zweiten Kreis, der den Saugseitenhohlraum (16) und Kühlungsmittel (40) der inneren Sitzfläche (3), die durch eine Öffnung (21) miteinander verbunden sind, die in einer inneren Dichtungsplatte (20) der inneren Sitzfläche (3) ausgeführt sind, umfaßt.

2. Schaufel nach Anspruch 1, **dadurch gekennzeichnet, daß** der Vorderkantenkanal (10) mit Hindernissen (12) versehen ist.

3. Schaufel nach einem der Ansprüche 1 und 2, **dadurch gekennzeichnet, daß** zwischen den Längsrippen (22) der Seitenwände (7, 8) Hindernisse (18) vorgesehen sind.

4. Schaufel nach einem der Ansprüche 1 bis 3, **dadurch gekennzeichnet, daß** Stege (26) die Seitenwände (7, 8) hinter der rohrförmigen Auskleidung (13) miteinander verbinden.
